# EUROPEAN PATENT SPECIFICATION

(11) **EP 2 130 983 B1**
(45) Date of publication and mention of the grant of the patent: **16.11.2016**
(21) Application number: 08425400.2
(22) Date of filing: 05.06.2008
(51) Int. Cl.: E03F 7/10, C02F 9/00

(54) **Mobile method and system designed for recycling water from sludges, in particular for service vehicles for cleaning drains, wells, and the like**
Mobiles System und dazugehöriges Verfahren zur Rückgewinnung von Wasser aus Schlämmen, insbesondere für Kanalreinigungsfahrzeuge
Méthode et système mobile de recyclage d'eau des boues, en particulier pour des véhicules de nettoyage de canalisations

(43) Date of publication of application: 09.12.2009
(73) Proprietor: Jurop S.p.A., 33082 Azzano Decimo (Prov. of Pordenone) (IT)
(72) Inventor: Santarossa, Danilo, 33082 Azzano Decimo (IT); Frischknecht, Konrad, 9100 Herisau (CH)
(74) Representative: Borsano, Corrado

(56) References cited:
- DE-A1- 3 313 635
- DE-A1- 4 311 837
- DE-A1- 19 541 950
- FR-A- 2 873 135
- US-A- 3 434 598

## Description

### Field of the invention

The present invention relates to a method for recycling water from sludges sucked in from drains, wells, and the like, of a mobile system, in particular designed to be installed on service vehicles for purging drains, wells, and the like. The invention also relates to a vehicle equipped with said system.

### Prior ART

For cleaning wells and drains, it is common practice to use mobile equipment installed on vehicles, said equipment usually comprising one or more cisterns, if need be, high-pressure pumps, pumps or compressors for intake of the sludges. In fact, intake of the sludges is in general obtained by setting a cistern or one of its compartments in negative pressure so that the sludges are sucked in directly through a purposely provided pipe, even though other methodologies are possible.

The cisterns mainly have two purposes: supplying a reserve of water useful for washing wells or pipes, in general by means of high-pressure pumps; and receiving the sludges sucked in. To increase the efficiency of the operations, and hence the operating autonomy of the vehicle, the attempt is made to reuse also part of the water that is entrained by the sludges sucked in. For example, the water can be extracted from a certain level of a cistern or compartment so as to enable a certain settling of the sludges on the bottom and hence a minimum separation. In the case where a number of compartments or cisterns are present, it is also possible to proceed to a coarse filtration. For example, sludge can be sucked in from a compartment by means of a recycling pump, causing the sludge to traverse a coarse filter. The water recovered can be sent into a purposely provided compartment ready for use. This can be followed by a passage through other filtering systems or through a cyclone, from which the depurated water is collected, as has been seen previously, and the thickened portion is sent back into the compartment from which it arrived. This increases the amount of water available and improves the quality thereof.

With the methods and equipment according to the known art, however, the operating autonomy of a vehicle used for the services referred to above is still rather limited, in general to a small number of cleaning cycles. Then, it becomes necessary for the vehicle to go back to the operating centre for discharge of the sludges collected and supply of new clean washing water. It would consequently be desirable to increase the operating autonomy of the vehicle, without, however, further increasing the volume of the cisterns on board, which is already considerable, or the number of the compartments.

In addition, it would be desirable to improve the quality of the washing water available in a whole series of cleaning operations, the aim being to increase the service life and reduce maintenance of the pumps on board, in particular the high-pressure ones used for washing. Furthermore, in many countries, more severe legal requisites have been envisaged on the quality of the water used for certain operations. In the case of wells, for example, after cleaning it is necessary to fill the water siphon so as to create a hydraulic guard that will prevent any possible contaminants spilt on the road surface from reaching the drains, and that, in any case, will isolate the latter from outside. It is clear that the quality of said water is important for preventing drawbacks, such as bad smells, and delaying the need for new purging operations. In addition, a greater recovery of water would reduce the volume of sludges to be disposed of, given the same number of cleaning operations performed.

FR 2 873 135 A discloses a system according to the preamble of claim 1 of the present invention.

### Summary

The problems set forth above have now been solved by means of a mobile system, in particular for a vehicle, for cleaning and purging drains, wells, and the like, said system comprising the features of claim 1, in particular:
a sludge-collection tank; and
a recycling line, which connects said sludge-collection tank to a separator;
said system being characterized in that it comprises means for introduction of a flocculant in said line upstream of said separator.

A line for the thickened sludge connects said separator to said sludge-collection tank; in addition, a line for the depurated water connects said separator to a tank for the depurated water.

The invention relates to a vehicle equipped with said system according to claim 10.

The invention moreover relates to a method according to claim 11 for recycling the water from sludges, comprising pumping of the sludges from a sludge-collection tank into a recycling line, and the subsequent passage of the sludges into a separator, preferably of a mechanical type, said method being characterized in that it envisages, prior to passage into the separator, introduction of a flocculating agent.

According to the invention, the water purified by the separator is collected in a depurated-water tank, for a subsequent use, whereas the thickened part is reintroduced into the sludge-collection tank.

By "tank" is meant, where not otherwise specified, a cistern or a compartment thereof, or the like, forming part of a mobile system for cleaning drains, wells or the like.

The invention is represented by the contents of the annexed claims.

### List of figures

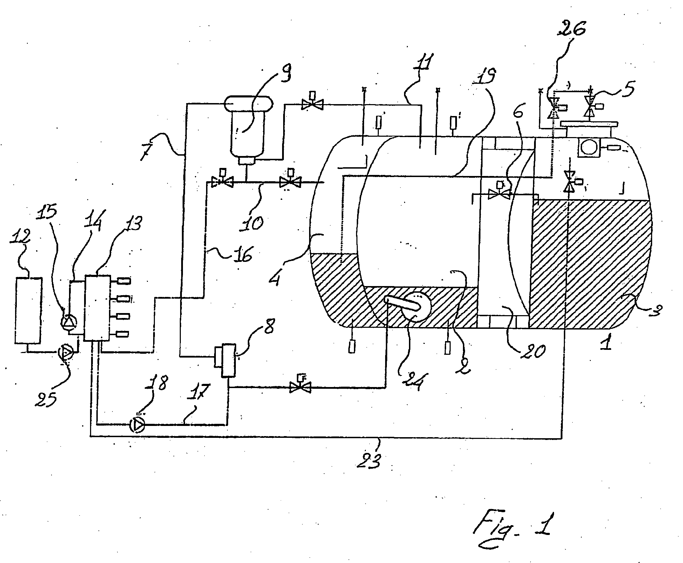

The present invention will now be illustrated by means of the detailed description of preferred, but non-exclusive, embodiments provided purely by way of example, with the aid of the attached Figure 1, which is a schematic illustration of a system according to the present invention.

### Detailed description of an embodiment

Represented schematically in Figure 1 is a mobile system, in particular a system installed on a service vehicle. Present thereon is a cistern 1, divided into a number of compartments. The two compartments 2 and 3 are designed for receiving sludges sucked in from drains, wells or the like. The water compartment 4 is designed for collection of recycled water for subsequent reuse. It is understood that, as occurs normally in mobile systems of this sort, the various compartments can be used differently if need be. For example, it is common practice, whenever the vehicle is to go out, to charge all the compartments of the cistern with clean water. Bit by bit the water is used, whilst the compartments 2 and 3 are filled with the sludges sucked in, according to an appropriate operating scheme. According to a possible embodiment, the compartments 2 and 3 are separated by the mobile wall 20 so as to vary the volume of the compartments accordingly during the various operations.

As has been said, the first sludge compartment 2 is designed to receive sludges sucked in; for example, a vacuum may be created in said compartment by means of a purposely provided compressor, designed to create a vacuum or pressurize the various compartments by means of an appropriate system of connections. The pressurization of the various compartments may for example be in the region of 0.5 - 2 bar. According to one procedure, the intake pipe, through the valve 5 is connected to the second sludge compartment 3, which communicates with the first sludge compartment 2 through the by-pass 6, equipped with a valve. Once the predefined maximum level is reached in the first sludge compartment 2, it is possible to close the by-pass and carry out suction directly in the second sludge compartment 3.

The first sludge compartment 2 is connected to a recycling line 7, equipped with a recycling pump 8. There may be set on said line, if deemed appropriate, a pre-separator 24, which can be a coarse filter and can be located at the inlet on the line that can be set at an adequate level in the first sludge compartment 2, preferably towards the bottom thereof. A separator 9 is preferably positioned downstream of the recycling pump, and has one outlet for the depurated water 10 and one outlet 11 for the thickened suspension. Said separator can be of any appropriate type, for example a cyclone or an inertial separator. According to a preferred aspect, it is a cyclone separator equipped with mobile parts, such as a blading kept in rotation by a purposely provided motor, for example a hydraulic motor. The blading increases the degree of separation thanks to the centrifugal force. Devices of this or another type, adequate for the purpose, are known and do not require any further description herein. According to a preferred aspect, the line 10 for the depurated water is connected to the water compartment 4, where the depurated water is collected, whilst the line 11 takes the thickened suspension back into the first sludge compartment 2. In this way, it is possible to thicken the sludge collected and obtain water that can be used for cleaning operations and filling drain wells. The cleaning operations can be performed with high-pressure nozzles, taking water from the water compartment 4, whilst the operations of filling can be performed by pressurizing the water compartment 4 by means of the compressor and taking water with a purposely provided pipe 19, which is connected to the sludge-intake and water-discharge pipes through the valve 26. It has been noted that the quality of the water is not always satisfactory. Furthermore, given the normal mode of operation, the quality is extremely variable over a series of operations. The water in the water compartment 4 can be used as washing water, with high-pressure nozzles, above all where external water sources are not available. For this purpose, a line with high-pressure pumps can be provided on the vehicle. As usually occurs, high pressure can be supplied to one of the pipes used also for intake or discharge of the tanks, to which a device comprising the nozzle can be applied.

The system according to the present invention has means for introduction of a flocculant into the recycling line. The introduction is obtained upstream of the separator. The means comprise a reservoir, for example a tank 12 of flocculant, and a mixer 13 for generation of a flocculant mixture. Said mixer can be a simple tank, of appropriate volume, which can have, for example, a capacity of 5 or 10 litres and may possibly be equipped with a line 14 and a pump 15 for recycling or other means designed to promote mixing. In fact, it is desirable for the pure flocculant to be mixed with water prior to introduction in the water to be treated. By way of example, from one litre of flocculant 100 litres of flocculant mixture are generated, which, in turn are enough for approximately 50 000 litres of treated water. This as regards what is defined a degree of "average flocculation", taking into account that the proportions can be varied considerably, according to the requirements. Taking into account that a cistern such as the one of Figure 1 can be typically between 5 and 20 m³ in all, it is clear that a tank of flocculant of small dimensions can be used for a number of working days without there being any problems due to the need to store large amounts of flocculant on the vehicle. It is instead preferable to generate the mixture directly on the vehicle. For this purpose, it is possible to use the depurated water coming from the water compartment 4 or directly from the separator 9 by means of a purposely provided line 16. In this way, the discharge head of the pump 8 can be exploited.

The introduction line 17 connects the mixer 13 to the recycling line 7. Preferably, the point of introduction is set upstream of the recycling pump 8, which favours mixing of the mixture in the recirculated water. The pump 18 can be designed for overcoming the pressure that can exist in the recycling line, for example on account of the hydrostatic head in the first sludge compartment 2. Pumps and valves can be used for dosage of the components (such as, for example, the dosing pump 25). According to a possible aspect of the invention, it is possible to perform steps of recycling with or without introduction of flocculant even when other operations are not performed, for example, when the vehicle is travelling: All the operations can be performed manually, upon request of the operator or can be managed by an on-board computerized system. There can be provided level sensors for enabling control of the various operations.

It is possible, if so desired, to transfer the contents of the second sludge compartment 3 into the first sludge compartment 2 through the by-pass to obtain sludges to be subjected to the recycling process for obtaining water or reducing the volume of the sludges.

The line 23 can be used for introducing flocculant into the second sludge compartment 3, if so desired. It is, in fact, possible to take water from said compartment in the case where the sludges deposited there are not very thick, on account of the abundance of water in the drains. Said technique enables increase in the efficiency of the operation of suction of the sludges.

As flocculant any known product having characteristics of an appropriate type can be used. Examples are the products marketed under the trade names BASF Sedipur CL Series®, or else Flonex ® or AQUAFLOC ® F 410 CL, F 430 CL.

It has been found that the system according to the present invention, in addition to providing washing and filling water of excellent quality, makes it possible to increase the operating possibilities of a service vehicle, with considerable increase in the number of possible operations without having to go back to the operating centre for discharge of the sludges and charging of clean water. Also the consumption of clean water is reduced, with increase in the fraction of recovery from the sludges.

## Claims

1. A mobile system, in particular for a vehicle, for cleaning and purging drains, wells, and the like, comprising:
a sludge-collection tank (2);
a water compartment (4);
a separator (9); and
a recycling line (7), which connects said sludge-collection tank to said separator (9);
said system further comprising means (12, 13, 17, 18) for the introduction of a flocculant in said line upstream of said separator (9),
said introduction means comprise a reserve (12) of flocculant, a mixer (13) , and a line (17) for introduction of the mixture connecting said mixer to said recycling line (7), and in that said separator (9) has one outlet (10) for the depurated water and one outlet (11) for the thickened suspension, said outlet for the depurated water (10) being connected to said water compartment (4) **characterized in that** said outlet (11) for the thickened suspension being connected to said sludge-collection tank (2) and the mixer is designed to receive depurated water from said separator (9).

2. The system according to Claim 1, **characterized in that** said recycling line comprises a pump (8), and the line for introduction of the mixture is connected to said recycling line upstream of said pump.

3. The system according to Claim 2, **characterized in that** it comprises a second sludge-collection tank (3) and a line (23) connecting said mixer to said second sludge-collection tank.

4. The system according to any one of the preceding claims, **characterized in that** said sludge-collection tanks and said water tank are compartments of a cistern.

5. The system according to any one of the preceding claims, **characterized in that** it comprises means designed to pressurize or depressurize one or more of said tanks and pipes for intake of sludges or discharge of sludges or water that can be appropriately connected to said tanks.

6. The system according to any one of the preceding claims, **characterized in that** said recycling line comprises a coarse filter (24) at its inlet from said sludge tank (2).

7. The system according to any one of the preceding claims, **characterized in that** said water tank can be connected to a high-pressure nozzle for washing drains, wells, and the like.

8. The system according to any one of the preceding claims, **characterized in that** said separator is a cyclone.

9. The system according to any one of the preceding claims, **characterized in that** said separator comprises a mobile part, preferably a blading, which can be kept in rotation by a purposely provided motor, designed to improve separation by centrifugal force.

10. A vehicle equipped with the system according to any one of the preceding claims.

11. A method for recycling water from sludges comprising pumping the sludges from a sludge-collection tank in a recycling line, and subsequent passage of the sludges into a separator, preferably of a mechanical type, the method comprises, prior to passage into the separator, introduction of a flocculating agent and in that the depurated water is collected in a water compartment (4) through a line (10) connecting one outlet of said separator (9) to said water compartment (4) **characterized in that** the thickened suspension is taken back to the sludge compartment (2) by a line (11) connecting the outlet of said separtor (9) to said sludge compartment (2), thus being possible to thicken the sludge collected and to obtain depurated water which can be used for cleaning operations.

12. The method according to Claim 11 implemented on a system according to any one of Claims 1 to 10.

## Patentansprüche

1. Mobiles, insbesondere für ein Fahrzeug ausgelegtes System zum Reinigen und zum Spülen von Abflüssen, Brunnen und dergleichen, welches umfasst:
einen Schlammsammelbehälter (2),
eine Wasserkammer (4),
einen Separator (9) und
eine Rückführleitung (7), welche den genannten Schlammsammelbehälter mit dem genannten Separator (9) verbindet,
wobei das genannte System außerdem Mittel (12, 13, 17, 18) für die Zuführung eines Flockungsmittels in die genannte Leitung auf der Anströmseite des genannten Separators (9) umfasst,
wobei die genannten Zuführungsmittel einen Vorratsbehälter (12) für Flockungsmittel, einen Mischer (13) und eine Leitung (17) zur Zuführung des Gemischs umfassen, wobei Letztere den genannten Mischer mit der genannten Rückführleitung (7) verbindet, und dadurch, dass der genannte Separator (9) eine Austrittsöffnung (10) für das gereinigte Wasser und eine Austrittsöffnung (11) für die eingedickte Suspension aufweist, wobei die genannte Austrittsöffnung für das gereinigte Wasser (10) an die genannte Wasserkammer (4) angeschlossen ist,
**dadurch gekennzeichnet, dass** die genannte Austrittsöffnung (11) für die eingedickte Suspension an den genannten Schlammsammelbehälter (2) angeschlossen ist und der Mischer dergestalt ausgelegt ist, dass er gereinigtes Wasser vom genannten Separator (9) aufnimmt.

2. System nach Anspruch 1, **dadurch gekennzeichnet, dass** die genannte Rückführleitung eine Pumpe (8) umfasst und die Leitung zur Zuführung des Gemischs auf der Anströmseite der genannten Pumpe an die genannte Rückführleitung angeschlossen ist.

3. System nach Anspruch 2, **dadurch gekennzeichnet, dass** es einen zweiten Schlammsammelbehälter (3) und eine Leitung (23) umfasst, welche den genannten Mischer mit dem genannten zweiten Schlammsammelbehälter verbindet.

4. System nach irgendeinem der vorangehenden Ansprüche, **dadurch gekennzeichnet, dass** die genannten Schlammsammelbehälter und der genannte Wasserbehälter Kammern einer Zisterne sind.

5. System nach irgend einem der vorangehenden Ansprüche, **dadurch gekennzeichnet, dass** es Mittel umfasst, welche dergestalt ausgelegt sind, dass sie einen oder mehrere der genannten, der Aufnahme von Schlämmen oder dem Austragen von Schlämmen oder Wasser dienenden Behälter und der auf geeignete Weise an die genannten Behälter angeschlossen Rohre mit Druck beaufschlagen oder den Druck darin mindern.

6. System nach irgendeinem der vorangehenden Ansprüche, **dadurch gekennzeichnet, dass** die genannte Rückführleitung an ihrer Eintrittsstelle vom genannten Schlammbehälter (2) einen Grobfilter (24) aufweist.

7. System nach irgendeinem der vorangehenden Ansprüche, **dadurch gekennzeichnet, dass** der genannte Wasserbehälter an eine Hochdruckdüse zum Waschen von Abflüssen, Brunnen und dergl. angeschlossen werden kann.

8. System nach irgendeinem der vorangehenden Ansprüche, **dadurch gekennzeichnet, dass** der genannte Separator ein Zyklon ist.

9. System nach irgend einem der vorangehenden Ansprüche, **dadurch gekennzeichnet, dass** der genannte Separator ein bewegliches Teil, vorzugsweise eine Schaufelanordnung, umfasst, welche durch einen zweckdienlich eingesetzten Motor in Drehung versetzt wird und dergestalt ausgelegt ist, dass die Trennung durch Zentrifugalkraft verbessert wird.

10. Fahrzeug, welches mit dem System nach irgendeinem der vorangegangenen Ansprüche ausgestattet ist.

11. Verfahren zur Rückgewinnung von Wasser aus Schlämmen, wobei dieses Verfahren das Pumpen der Schlämme aus einem Schlammsammelbehälter in eine Rückführleitung und den anschließenden Eintritt der Schlämme in einen Separator, der vorzugsweise vom mechanischen Typ ist, umfasst, wobei dieses Verfahren vor dem Eintritt in den Separator die Zuführung eines Flockungsmittels umfasst, und dadurch, dass das gereinigte Wasser in einer Wasserkammer (4) über eine Leitung (10) gesammelt wird, welche eine Austrittsöffnung des genannten Separators (9) mit der genannten Wasserkammer (4) verbindet, **dadurch gekennzeichnet, dass** die angedickte Suspension in die Schlammkammer (2) über eine Leitung (11) zurückgeführt wird, welche die Austrittsöffnung des genannten Separators (9) mit der genannten Schlammkammer (2) verbindet, wodurch ermöglicht wird, den gesammelten Schlamm zu verdicken und gereinigtes Wasser zu erhalten, welches für Reinigungsarbeiten verwendet werden kann.

12. Verfahren nach Anspruch 11, welches in ein System nach irgendeinem der Ansprüche 1 bis 10 implementiert ist.

## Revendications

1. Système mobile, en particulier pour un véhicule, pour le nettoyage et la purge de drains, puits et similaires, comprenant :
un réservoir de collecte de boue (2) ;
un compartiment d'eau (4) ;
un séparateur (9) ; et
une conduite de recyclage (7) qui relie ledit réservoir de collecte de boue audit séparateur (9) ;
ledit système comprenant en outre des moyens (12, 13, 17, 18) pour l'introduction d'un floculant dans ladite conduite en amont dudit séparateur (9),
lesdits moyens d'introduction comprennent une réserve (12) de floculant, un mélangeur (13) et une conduite (17) pour l'introduction du mélange reliant ledit mélangeur à ladite conduite de recyclage (7) et en ce que ledit séparateur (9) a une sortie (10) pour l'eau purifiée et une sortie (11) pour la suspension épaissie, ladite sortie pour l'eau purifiée (10) étant reliée audit compartiment d'eau (4), **caractérisé en ce que** ladite sortie (11) pour la suspension épaissie étant reliée audit réservoir de collecte de boue (2), et le mélangeur est conçu pour recevoir de l'eau purifiée dudit séparateur (9).

2. Système selon la revendication 1, **caractérisé en ce que** ladite conduite de recyclage comprend une pompe (8) et la conduite pour l'introduction du mélange est reliée à ladite conduite de recyclage en amont de ladite pompe.

3. Système selon la revendication 2, **caractérisé en ce qu'**il comprend un second réservoir de collecte de boue (3) et une conduite (23) reliant ledit mélangeur audit second réservoir de collecte de boue.

4. Système selon l'une quelconque des revendications précédentes, **caractérisé en ce que** lesdits réservoirs de collecte de boue et ledit réservoir d'eau sont des compartiments d'une citerne.

5. Système selon l'une quelconque des revendications précédentes, **caractérisé en ce qu'**il comprend des moyens conçus pour pressuriser ou dépressuriser un ou plusieurs desdits réservoirs et tuyaux pour l'admission de boues ou l'évacuation de boues ou d'eau qui peuvent être reliés de manière appropriée auxdits réservoirs.

6. Système selon l'une quelconque des revendications précédentes, **caractérisé en ce que** ladite conduite de recyclage comprend un filtre grossier (24) sur son entrée depuis ledit réservoir de boue (2).

7. Système selon l'une quelconque des revendications précédentes, **caractérisé en ce que** ledit réservoir d'eau peut être relié à une buse haute pression pour le lavage de drains, puits et similaires.

8. Système selon l'une quelconque des revendications précédentes, **caractérisé en ce que** ledit séparateur est un cyclone.

9. Système selon l'une quelconque des revendications précédentes, **caractérisé en ce que** ledit séparateur comprend une partie mobile, de préférence un aubage qui peut être maintenu en rotation par un moteur prévu à cette fin, conçu pour améliorer la séparation par la force centrifuge.

10. Véhicule équipé du système selon l'une quelconque des revendications précédentes.

11. Procédé de recyclage d'eau de boues comprenant le pompage des boues depuis un réservoir de collecte de boue dans une conduite de recyclage et le passage ultérieur des boues dans un séparateur, de préférence de type mécanique, le procédé comprend avant le passage dans le séparateur, l'introduction d'un agent floculent et en ce que l'eau purifiée est collectée dans un compartiment d'eau (4) par une conduite (10) reliant une sortie dudit séparateur (9) audit compartiment d'eau (4), **caractérisé en ce que** la suspension épaissie est reprise au compartiment de boue (2) par une conduite (11) reliant la sortie dudit séparateur (9) audit compartiment de boues (2), étant ainsi possible d'épaissir la boue collectée et d'obtenir de l'eau purifiée qui peut être utilisée pour des opérations de nettoyage.

12. Procédé selon la revendication 11, mise en oeuvre sur un système selon l'une quelconque des revendications 1 à 10.
